# EUROPÄISCHE PATENTSCHRIFT

(11) **EP 1 656 327 B1**
(45) Veröffentlichungstag und Bekanntmachung des Hinweises auf die Patenterteilung: **14.10.2009**
(21) Anmeldenummer: 04735234.9
(22) Anmeldetag: 28.05.2004
(51) Int. Cl.: C02F 1/52, C02F 1/54, C02F 1/56

(54) **VERFAHREN ZUR VERMINDERUNG DER QUECKSILBERKONZENTRATION IN ABWASSERAUFBEREITUNGSSCHLÄMMEN**
METHOD FOR REDUCING THE CONCENTRATION OF MERCURY IN SLUDGE IN A SEWAGE TREATMENT PLANT
PROCEDE POUR DIMINUER LA CONCENTRATION DE MERCURE DANS DES BOUES DE TRAITEMENT DES EAUX USEES

(30) Priorität: 05.08.2003 DE 10336534
(43) Veröffentlichungstag der Anmeldung: 17.05.2006
(73) Patentinhaber: Ashland Licensing and Intellectual Property LLC, Dublin, OH 43017 (US); E.ON Engineering GmbH, 45896 Gelsenkirchen (DE); E.ON Kraftwerke GmbH, 30457 Hannover (DE)
(72) Erfinder: GRAF, Peter, 45964 Gladbeck (DE); DIECKMANN, Hans-Joachim, 44625 Herne (DE); TEMBRINK, Joachim, 46244 Bottrop (DE); SEIDA, Frank, 59368 Werne (DE)
(74) Vertreter: Bülle, Jan
(86) Internationale Anmeldenummer: PCT/EP2004/005806
(87) Internationale Veröffentlichungsnummer: WO 2005/023719

(56) Entgegenhaltungen:
- DE-A- 10 061 483
- US-A- 3 695 838
- US-A- 4 087 359
- US-A- 4 814 091
- DEGUSSA AG: "TMT 15 für die Abtrennung von Schwermetallen aus Abwässern"[Online] 13. September 2002 (2002-09-13), XP002293967 Gefunden im Internet: URL:https://www.peroxygen-chemicals.net/ao /PDF/TMT_Broschuere_D_v94web.pdf> [gefunden am 2004-08-25]
- JENS KORELL, HELMUT SEIFERT, HANS-RUDOLF PAUR, SVEN ANDERSSON UND PER BOLIN: "Rauchgasreinigung mit dem MercOx-Verfahren" CHEMIE INGENIEUR TECHNIK, Bd. 74, Nr. 7, 5. Juli 2002 (2002-07-05), Seiten 1016-1019, XP002293968

## Beschreibung

Die vorliegende Erfindung betrifft ein Verfahren zur Verminderung der Quecksilberkonzentration in Abwasseraufbereitungsschlämmen von zwei-stufigen Rauchgasentschwafelungsanlagen.

Das bereits seit dem Altertum bekannte Schwermetall Quecksilber ist das einzige bei Raumtemperatur flüssige Metall, dessen Verbreitung in der Umwelt bedingt durch die hohe Flüchtigkeit praktisch ubiquitär ist Verantwortlich hierfür sind neben den natürlichen Quecksliberquellen, die aus der natürlich vorkommenden Vulkantätigkeit der Erde, der Gesteinsverwitterung sowie dem natürlichen Ausgasen des Quecksilbers aus der Erdkruste bzw. den Ozeanen stammen, auch anthropogene Quecksilberemissionen wie z.B. das Verbrennen fossiler Brennstoffe, das Rösten bzw. Schmelzen sulfidischer Erze in Hüttenbetrieben, die Zement- und Glasherstellung, die Müllverbrennung sowie der Einsatz von Quecksilberverbindungen in der Landwirtschaft etc.

Die Toxizität des Quecksilbers, insbesondere der Quecksilberdämpfe sowie seiner anorganischen und organischen Verbindungen ist seit alters her bekannt. So wurden chronische Quecksilbervergiftungen bereits von Paracelsus als "Quecksilber-Krankhelt" beschrieben. Die Ergebnisse der unzähligen wissenschaftilchen Studien über die umweltmedizinischen Auswirkungen des Quecksilber und seiner Verbindungen auf Fauna und Flora sowie die durch entsprechende Untersuchungen im arbeit medizinischen Bereich gewonnenen Erkenntnisse haben bereits in der Vergangenheit die nationalen Gasetzgeber zu gesetzlichen Maßnahmen im Bereich des Arbeits- und Umweltschutzes veranlaßt. Eine unmittelbare Folge hiervon ist, daß die bekannten Anwendungen des Queckstilber und seiner Verbindungen z.B. in der Medizin, in der Chemie, in technischen Geräten und in der Landwirtschaft in der jüngeren Vergangenheit stark zurückgegangen sind. So ist beispielsweise in der Bundesrepublik Deutschland seit 1988 der Einsatz von Quecksilberverbindungen als Schädlingsbekämpfungsmittel verboten.

Eine Ursache der anthropogenen Quecksilberemissionen ist wie bereits oben erwähnt das Verbrennen fossiler Brennstoffe. Zur Verringerung der bei dieser Verbrennung erzeugten Schadstoffemissionen ist in der Bundesrepublik Deutschland ist für Kraftwerke, die solche fossilen Brennstoffe zur Energieerzeugung verbrennen, die Rauchgasentschwefelung als Umweltschutzmaßnahme gesetzlich vorgeschrieben. In der Technik sind eine Vielzahl von Verfahren zur Rauchgasentschwefelung bekannt Exemplarisch sei hier auf das Kalkwaschverfahren, ein nasses Entschwefelungsverfahren hingewiesen. Üblicherweise kommen bei der Rauchgasentschwefelung ein- und zweistufige Wäscheranlagen mit zum Einsatz.

Alle fossil gefeuerten Kraftwerksanlagen mit nasser Rauchgasentschwefelung besitzen zur Reduzierung der Schwermetallgehalte eine Abwasseraufbereitungsanlage, die im abzuleitenden Abwasser einen Neutralisationsschlamm erzeugt. Dieser überwiegend aus Gips (> 90 %) und Schwermetallverbindungen bestehende Schlamm, den man auch als REA-Abwasseraufbereitungsschlamm (nachfolgend RAA-Schlamm genannt) bezeichnet, ist für den überwiegenden Anteil der Kraftwerksanlagenbetreiber ein zu entsorgendes Deponieprodukt.

Zur Einsparung von Entsorgungskosten besteht für Kraftwerksanlagenbetreiber jedoch die Möglichkeit, eine behördliche Genehmigung zur Mitverbrennung des RAA-Schlammes mit dem Brennstoff in der Feuerungsanlage zu erhalten, wobei in der Regel gegenüber den Genehmigungsbehörden der Verbleib der Schwermetalle in den Stoffströmen und die Einhaltung der gesetzlichen Emissionsgrenzwerte (z.B. in der Bundesrepublik Deutschland die derzeit geltende 17. Bundesimmissionsschutzverordnung (BImSchV)) nachzuweisen ist.

Als Folge der Anreicherung des besonders toxisch wirkenden, hoch flüchtigen Umweltgiftes Quecksilber und seiner Verbindungen im RAA-Schlamm wird aufgrund der geltenden Umweltschutzbestimmungen seitens der Behörden für die Genehmigung der Mitverbrennung eine deutliche Absenkung des Quecksilbergehaltes im RAA-Schlamm gefordert.

Es besteht somit ein großes Bedürfnis nach einem Verfahren zur Verminderung des Quecksilberanteiles des bei der Rauchgasentschwefelung anfallenden RAA-Schlammes, das zu einer starken Reduzierung der Quecksilberemissionen führt, und somit auch für die Anlagenbetreiber eine signifikante Entlastung bei den anfallenden Entsorgungskosten des RAA-Schlammes bewirkt. Weiterhin soll das Verfahren mit geringem technischen und betriebswirtschaftlichen bzw. personellen Aufwand betrieben werden und insbesondere in bestehende REA-Abwassefaufbereitungsanlagen integriert werden können.

Degussa AG, TMT 15^{®} für die Abtrennung von Schwermetallen aus Abwässern, XP002293967 offenbart ein kombiniertes Verfahren zur Abtrennung von Quecksilber aus Abwässern, welche bei der Rauchgaswaschwasserbehandlung anfallen, unter gemeinsamer Verwendung von Kalk und TMT 15^{®}.

US4087359 betrifft ein Verfahren zur Entfernung von Quecksilber und Quecksilbersalzen aus flüssigen Abläufen durch Umsetzung mit Thioharnstoff oder einem Salz von Hydroxylamin.

US4814091 betrifft ein Verfahren zur Entfernung von Metallen aus Wasser, bei dem die Metalle als Sulfide präzipitiert werden.

DE10061483 betrifft ein Verfahren zur Herstellung von Wasser-in-Wasser Polymerdispersionen, welche sich u.a. als Flockungsmittel eignen.

US3695838 offenbart ein Verfahren zur Entfernung von Quecksilber aus Abwasser, wobei das Quecksilber in Quecksilbersulfid überführt wird.

Aufgabe der vorliegenden Erfindung war es daher, ein solches Verfahren bereitzustellen, das zur Verminderung der Quecksilberkonzentration in von Abwasseraufbereltungsschlämmen von ein- und zweistufigen Rauchgasentschwefelungsanlagen (nachfolgend REA-Anlagen genannt) eingesetzt werden kann.

Es wurde überraschend gefunden, daß diese Aufgabe gelöst wird durch ein Anspruch 1

Das erfindungsgemäße Verfahren ist auf eine Reinigungsstufe gerichtet, die in eine konventionelle Abwasseraufbereitungsanlage integriert ist und eine Vorabtrennung von Quecksilberverbindungen vor der eigentlichen Schwermetallfällung ermöglicht. Hierzu wird dem zu behandeinden Abwasser einer Rauchgasentschwefelungsanlage mindestens ein Fällungsmittel zugesetzt und der entstandene Niederschlag mit mindestens einem Flockungsmittel und/oder Flockungshilfsmittel ausgeflockt. Die sich bildenden Niederschlegsftocken werden dann durch Einsatz einer Trennvorrichtung aus dem Abwasserstrom, abgebtrennt.

Vorteilhaft ist an dem erfindungsgemäßen Verfahren, daß je nach Anspruch an die Effizienz der vorzunehmenden Abtrennung die erfindungsgemäße Reinigungsstufe sowohl einstufig als auch mehrstufig in konventionellen Abwasseraufbereitungsanlagen integriert sein kann.

Weiterhin wurde gefunden, daß insbesondere bei hohen Feststoffgehalten von REA-Abwässern es sinnvoll sein kann, die Hauptmenge des Feststoffs vor der Quecksilber-Fällung abzutrennen, um eine weitere Reduzierung der schwermetallhaltigen Restschlammmenge zu erreichen. Sofern das Quecksilber nicht in gelöster Form, sondern an den Feststoff gebunden vorliegt, kann im erfindungsemäße Verfahren eine zusätzliche Oxidationsstufe vorgesehen werden.

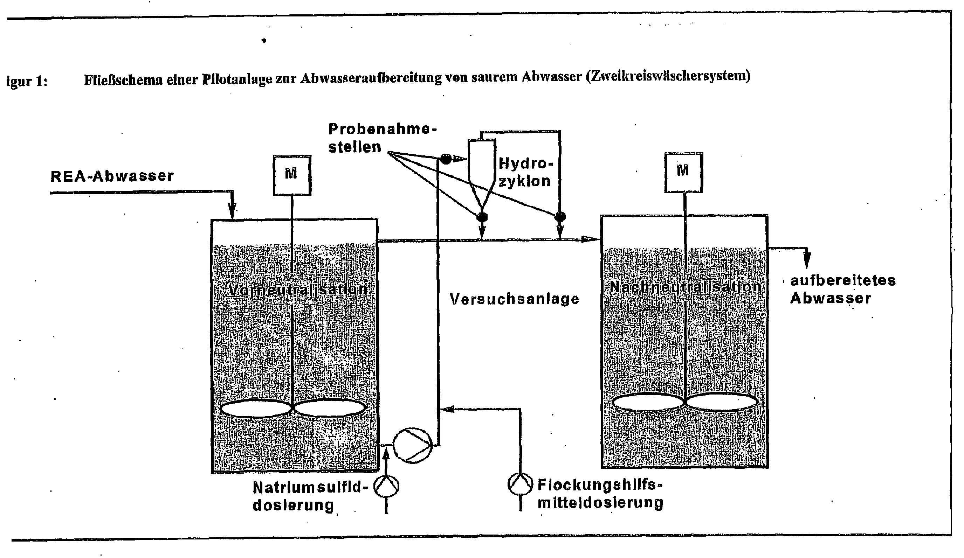

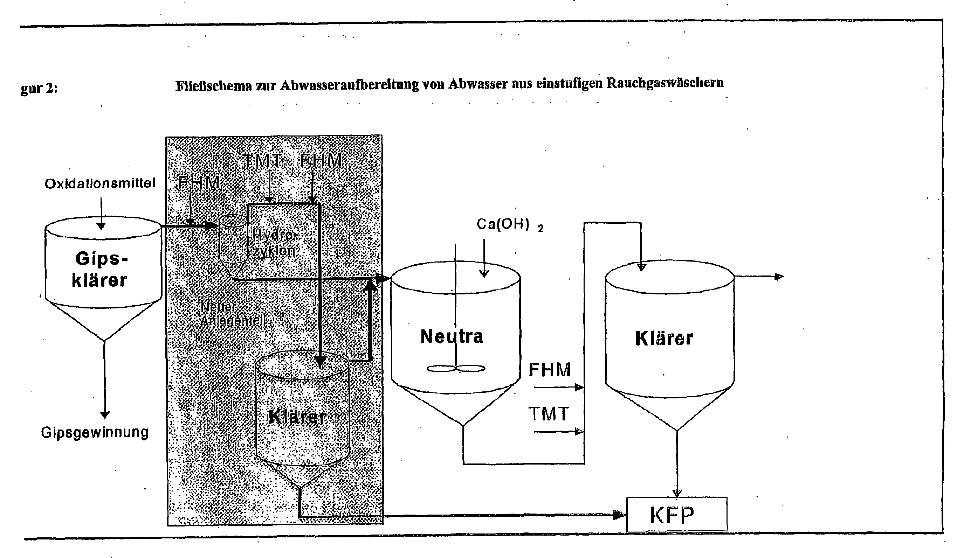

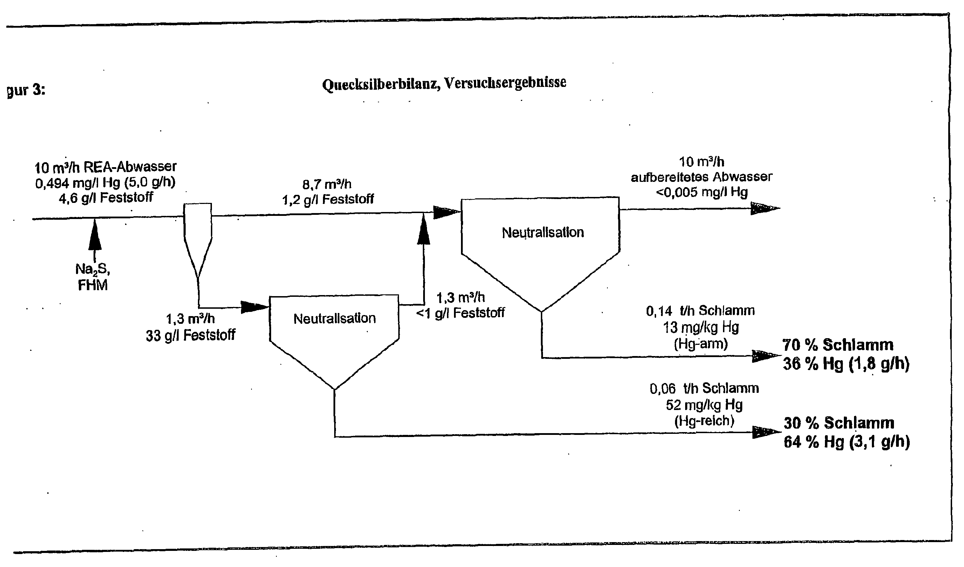

Das erfindungsgemäße Verfahren wird nachfolgend in Figur 1 beispielhaft erläutert So zeigt Figur 1 ein vereinfachtes Fließschema einer Anlagenschaltung von einer Abwasseraufbereitungsanlage eines Kraftwerkes mit zweistufiger Rauchgasentschwefelungsanlage, das die erfindungsgemäße Reinigungsstufe aufweist und in der zur Abscheidung der Quecksilber-Verbindungen als Trennvorrichtung, vorzugsweise ein Hydrozyklon verwendet wird. Dosierstellen für das Quecksilber-Fällungs- sowie die Flockungs und/oder Flockungshilfsmittel sind ebenfalls dargestellt.

Hierbei werden ein Vomeutrallsationsbehälter als Sammeltank für das saure REA-Abwasser aus den Abschlämmvolumenströmen der Vorwäscher und dem Gipsanlagenabwasser betrieben, wobei das REA-Abwaseer bei dieser sauren Fahrweise (Zweistufen-Wäschersystem) mit einem pH-Wert von <1 in den Vorneutralisationsbehälter eintritt. Das anfallende Abwasser wird über eine Pumpe zu einem Hydrozyklon gefördert. Der Hydrozyklon teilt dann den ankommenden Wasserstrom in einen feststoffarmen Oberlauf und einen feststoffreichen Unterlauf auf. Auf der Saugselte der Pumpe wird mindestens ein Fällungsmittel bzw. Schwermetallfällungsmittel zugegeben, wobei die Pumpe als Mischaggregat betrachtet werden kann.

Erfindungsgemäß können alle in der Abwassertechnik bekannten Fällungsmittel für Schwermetalle eingezetzt werden. Bevorzugt sind insbesondere solche Fällungsmittel, die auch im starksauren pH- Bereich eine Fällung von Schwermetallen gewährieisten. Vorzugsweise erfolgt die Fällung der gelösten Quecksilber-Verbindungen im starksauren Abwasser als Queckslibersulfid durch Dosierung von Alkalisulfidsulfidlösung auf der Saugselte der Pumpe, wobei die Dosierung von Natriumsulfidlösung insbesondere auch aus Gründen der Wirtschaftlichkeit besonders bevorzugt ist. Darüber hinaus können Thiole als Fällungsmittel eingesetzt werden.

Es ist bekannt daß die Fällung von schwermetallhaltigen Abwässern durch die Anwesenheit von Komplexbildnem beeinträchtigt bzw, sogar verhindert werden kann. In solchen Fällen werden üblicherweise Triazine zur Abtrennung der Schwermetalliverbindungen eingesetzt.

Auf der Druckseite der Pumpe wird erfindungsgemäß mindestens ein Flockungs- und/oder Flokungshitfsmittel dosiert, welche gleichzeitig mehrere Aufgaben erfüllt:

Zum ersten werden die Feststoffpartikel aus dem Rauchgaswäscher geflockt, da die Abscheldung der Partikel ohne solche Mittel in Trennvonichtungen wie z.B. Hydrozykion nicht möglich wäre, weil die Partikelgröße großtenteils <5 µm ist. Zum zweiten wird die zuvor gebildete Mikroflocke der Schwermetallfällung mit in die entstehende Makroflocke eingebunden und somit in der Trennvorrichtung abscheidbar gemacht.

Eine weitere Aufgabe der einzusetzenden Flockungs- und/oder Flockungshilfsmittel ist die Erzeugung einer stabilen Flocke, welche den Scherkräften der als Trennvorrichtung besonders bevorzugt eingesetzten Hydrozyklone standhält, so daß der abgetrennte Unterlauf aufgrund der stabilen Flockungsstruktur noch gut sedimentierbar ist.

Überraschenderweise wurde gefunden, daß eine Fest-/Flüssigtrennung unter Verwendung üblicher Trennvorrichtungen, vorzugsweise Hydrozyklonen möglich ist, well eine Teilchenagglomeration bzw. Flockung erreicht wird, wenn die Zugabe mindestens eines Flockungsmittels und/oder Flockungernitteis in der verwendeten Trennvorrichtung erfolgt Durch diese Tellchenagglomeration bzw. Flockung wird eine Vergrößerung der Tellchengröße/Flocke bzw. des Teilchendurchmessers/Flockendurchmessers der abzutrennenden Flocke bewirkt.

Bei der Auswahl der einzusetzenden Flockungsmittels und/oder Flockungsmittel ist zu berücksichtigen, daß die Koagulation oder Flockung der Feststoffpartikel sehr hohe Anforderungen an die einzusetzenden Mittel stellt, da der pH-Wert der Wäscherflüssigkeit im Dauerbetrieb um den pH-Wert 0 liegt und die gebildeten Flocken in den Trennvorrichtungen, insbesondere in Hydrozyklonen extremen mechanischen Beanspruchung unterworfen werden. Weiterhin muß sich die Flockenbildung spontan im Durchfluss der Abscheidungsvorrichtung ausbilden, wenn keine Misch- oder Konditionierungsbehälter in der Anlagenschaltung vorgesehen sind, um die Investitionskosten für die Anlage und den verfahrentechnischen Aufwand zu minimieren.

Erfindungsgemäß können ohne Einschränkung alle Flockungsmittel bzw. auch Flockungsmittelkombinationen eingesetzt werden, die eine Koagulation oder Agglomeration der Feststoffpartikel in einer Trennvorrichtung ermöglichen, so daß eine Fest-/Flüssigtrennung durchgeführt werden kann. Vorzugsweise sind solche Flockungsmittel einzusetzen, die eine Vergrößerung der Teilchen bzw. der abzutrennenden Flocke auf mindestens >15 µm und besonders bevorzugt auf mindestens >20 µm in der eingesetzten Trennvorrichtung bewirken, so daß dort eine sichere Fest-/Flüssigtrennung gewährleistet wird.

Weiterhin werden unter dem Begriff "Flockungs- und/oder Flockungshilfsmittel" erfindungsgemäß alle Stoffe und/oder Mittel verstanden, die Teilchenpartikel so beeinflussen können, daß sie zu Flocken aggregieren und aus dem System entfernt werden können. Erfindungsgemäße Flockungsmittel sind somit alle Verbindungen bzw. Mittel, die zur Fest-/Flüssigtrennung z. B. beim Klären von Flüssigkeiten, bei der Eindickung und Entwässerung von Schlamm, beispielsweise bei der Reinigung von industriellen und kommunalen Abwässern, der Aufbereitung von Trinkwasser, der Gewinnung von Steinsalz, Steinkohle, Kaolin und Erzen durch Flotation etc. zum Einsatz kommen und vielfach auch einfach mit den Begriffen Flockungshilfsmittel oder auch Sedimentationsbeschleuniger benannt werden.

Als erfindungsgemäße Flockungs- und/oder Flockungshilfsmittel können beispielsweise waserlösliche und/oder überwiegend wasserlösliche, teilvemetzte Polymerisate, Co- und Terpolymerisate aus wasserlöslichen nichtionogenen und/oder ionischen Monomeren und Comonomeren in Form von Pulvern, als wässrige Lösung oder als Wasser-in-Wasser-Dispersion oder Wasser-in-Öl-Dispersion eingesetzt werden. Solche Polymerisate sind z.B. die Homo-, Co- und Terpolymerisate von monoethylenisch ungesättigten Monomeren mit Säuregruppen, die zumindest teilweise als Salze vorliegen, oder deren Ester mit Di-C₁-C₂-alkylamino-C₂-C₆-Falkylalkoholen oder deren Amide mit Di-C₁-C₂-alkylamino-C₂-C₆-alkylaminen, die in protonierter oder quatemierter Form vorliegen, wie sie beispielsweise in EP-A 113 038 und EP-A 13 416 beschrieben sind, und gegebenenfalls weiteren monoethylenisch ungesättigten Monomeren.

Als anionische Polyelektrolyte sind vorzugsweise Homo- und/oder Copolymerisate von monoethylenischen ungesättigten Carbonsäuren und Sulfonsäuren, wie Acrylsäure, Methacrylsäure, Maleinsäure, Itaconsäure, Crotonsäure und/oder deren Alkali-, vorzugsweise Natrium-, Kalium- oder Ammoniumsalze, Vinylsulfonsäure, Acrylamido- und Methacrylamidoalkylsulfonsäuren, wie 2-Acrylamido-2-methylpropansulfonsäure, 2-Sulfoethylmethacrylat und Styrolsulfonsäure und/oder deren Alkali-, vorzugsweise Natrium- oder Kalium- oder Ammoniumsalze geeignet, weiterhin Vinylphosphonsäure und Styrolphosphonsäure sowie deren Alkalisalze, vorzugsweise Natrium- oder Kalium- oder Ammoniumsalze.

Vorzugsweise werden kationisch wirksame Flockungsmittel- und/oder Flockungshilfsmittel, z. B. Homo- und/oder Copolymerisate und/oder Terpolymerisate aus wasserlöslichen, monoethylenisch ungesättigten Vinylverbindungen, wie Acrylsäure- und Methacrylsäureester von Dialkylaminoalkylalkoholen in protonierter oder quatemierter Form, wie beispielsweise Dimethylaminoethylacrylat, Acrylsäure- und Methacrylsäureamide von Dialkylaminoalkylaminen, in protonierter oder quatemierter Form, wie Acrylamidopropyltrimethylammoniumchlorid und/oder Acrylamidopropyltrimethylammonium-methyl-methosulfat, vorzugsweise mit Acrylamid eingesetzt. Erfindungsgemäß verwendbare Copolymerisate werden weiterhin in EP-B-228 637 beschrieben.

Die Copolymerisate können aus den genannten ionischen Monomeren und nicht ionogenen, wasserlöslichen, monoethylenisch ungesättigten Monomeren, wie Acrylamid, Methacrylamid, N-C₁-C₂ alkylierte (Meth)acrylamide sowie mit N-Vinylamid, Vinylformamid, N-Vinylacetamid, N-Vinyl-N-methylacetamid, N-Vinylpyrrolidon gebildet werden. Geeignete wasserlösliche Monomere sind außerdem N-Methylolacrylamid, N-Methylol-methacrylamid sowie die mit einwertigen C₁- bis C₄-Alkoholen partiell oder vollständig veretherten N-Methylol(meth)acrylamide und Diallyldimethylammoniumchlorid.

Ebenso können die Copolymerisate in begrenztem Maße in Wasser schwer lösliche und/oder wasserunlösliche, ethylenisch ungesättigte Monomere, wie (Meth)acrylsäurealkylester und Vinylacetat enthalten, soweit die Löslichkeit oder Quellbarkeit der Copolymerisate in Wasser erhalten bleibt.

Die Polymerisate können darüber hinaus unter Einsatz von vernetzenden, mindestens zweifach reaktionsfähigen Monomeren, vorzugsweise zweifach ethylenisch ungesättigten Monomeren hergestellt werden, so daß sie in Wasser quellbar oder nur begrenzt löslich sind, oder aus wasserlöslichen und wasserquellbaren Polymerisaten bestehen.

Weiterhin können erfindungsgemäß wasserlösliche oder wasserquellbare, aus kationischen und anionischen Monomeren und gegebenenfalls nichtionogenen Monomeren gebildete, amphiphile Copolymerisate verwendet werden.

Vorzugsweise werden im erfindungsgemäßen Verfahren Polymere aus nichtionogenen, anionischen sowie besonders bevorzugt kationischen Vinyl- und/oder Acrylatpolymeren, die als Flockungsmittel bei der Abwasserbehandlung, Erz- und Kohleaufbereitung sowie der Papierherstellung verwendet werden, eingesetzt. Von besonderer Bedeutung sind hierbei wasserlösliche, kationische Polyelektrolyte, die in großen Mengen weltweit in Wasseraufbereitungsanlagen, insbesondere zur Verbesserung der Flockung und der Entwässerung der anfallenden Klärschlämme eingesetzt werden und in der Regel aus Polymeren von kationisierten Acrylsäurederivaten wie z.B. kationische Acrylsäure- oder Methacrylsäureestern bzw. Copolymerisate dieser Ester mit Acrylamid etc. bestehen. Bevorzugt werden kationische Flockungsmittel im erfindungsgemäßen Verfahren eingesetzt.

Als für das erfindungsgemäße Verfahren besonders bevorzugt zu verwendende Flockungsmittel sind Flockungsmittel zu nennen, die nach dem in der DE 100 61 483 A1 beschriebenen Herstellungsverfahren hergestellt werden. Die dort beschriebenen Wasser-in-Wasser-Polymerdispersionen werden hiermit durch Bezugnahme in die Beschreibung der vorliegenden Erfindung mit aufgenommen. Für das erfindungsgemäße Verfahren besonders vorteilhaft sind hierbei die gemäß DE 100 61 483 A1 erhältlichen Wasser-in-Wasser-Polymerdispersionen, die von der Stockhausen GmbH & Co. KG, Krefeld unter dem Handelsnamen PRAESTOL® E 150 hergestellt bzw. vertrieben werden.

Besonders vorteilhaft ist, daß die Praestol E 150^{©} Flockungsmittel der Firma Stockhausen ohne aufwendige Löse- und Dosiertechnik in das Verfahren integriert werden können, so daß hierdurch Investitionen für Löse- und Dosiertechnik auf ein Minimum reduziert und die Betriebssicherheit der betriebenen Anlage stark erhöht werden kann.

Als Trennvorrichtungen werden im erfindungsgemäßen Verfahren vorzugsweise Zyklone eingesetzt, die in der Lage sind, Feststoffpartikel oder Flüssigkeitströpfchen mit Hilfe der Flieh- und Schwerkraft abzutrennen. Zyklone für flüssige Systeme werden auch als Hydrozyklone bezeichnet, deren Verwendung zur Eindickung von Trüben und zur Abtrennung von Feststoffen aus Schlamm wie z. B. im Bereich der Gipssuspension oder bei der Sink-Schwimm-Aufbereitung seit vielen Jahren Stand der Technik ist.

Wesentliche Einflußgrößen für den Trennvorgang im Zyklon bzw. Hydrozyklon sind dabei die Dichten von Trägerflüssigkeit und Feststoff. So wird beispielsweise eine von Feststoffen zu befreiende Suspension in das Einlaufgehäuse des Hydrozyklons geführt. Diese tangentielle Einführung bewirkt eine Rotation der Suspension im inneren des Hydrozyklons. Unter der Einwirkung der Zentrifugelkraft erfolgt dann die Phasentrennung, wobei üblicherweise die nahezu feststofffreie Klarphase als Hydrozyklonoberlauf abgetrennt werden kann, während der Zyklonunterlauf mit der Feststoffphase einer sich anschließenden konventionellen Abwasseranlage zugeführt werden kann.

Besonders bevorzugt wird der Hydrozyklon als Trannvorrichtung im erfindungsgemäßen Verfahren eingesetzt, weil dieses Trennaggregat den in der Praxis gestellten Anforderungen in einer konventionellen Rauchgasentschwefelungsanlage gerecht wird, da die Abscheideleistung über den zugeführten Volumenstrom effektiv an die aktuellen Betriebsverhältnisse angepaßt werden kann.

Der nach Durchlaufen der erfindungsgemäßen Reinigungsstufe erhaltene sedimentierte quecksilberlagereicherte Unterlauf wird dann neutralisiert und einem Entwässerungsaggregat zugeführt. Der hierbei entstehende Schlamm wird anschließend deponiert.

Der feststoffarme Oberlauf des Hydrozyklons kann ohne weitere Behandlungsschritte in die klassische Abwasserbehandlungsanlage eingeleitet werden. Durch die beschriebenen Verfahrensschritte wird somit der anfallende Abwasserstrom in einen feststoff- und gleichzeitig quecksilberverbindungsreichen Hydrozyklonunterlauf und feststotf- und quecksilberverbindungsarmen Hydrozyklonobertauf aufgeteilt,

vorteilhaft kann mittels Verwendung eines Zyklons das erfindungsgemäße Verfahren in der Weise gesteuert werden, daß ein möglichst hoher Anteil Insbesondere der Quecksilberverbindungen in einen möglichst geringen Massenstrom des Hydrozyklonunterlaufes eingebracht wird. Die Qualität der Abscheidung der Quecksilberverbindungen ist hierbei abhängig vom eingesetzten Quecksilberfällungsmittel und der sauberen Abtrennung der Feststoffphase, da in besonderem Maße Quecksilbervebindungen adsorptiv an der Feststoffflocke angelagert werden können. Weiterhin vorteilhaft ist, daß die Aufteilung der Massenströme durch die Auswahl der Hydrozyklonbedüsung und dem Pumpendruck eingestellt werden kann.

Im folgenden wird die Erfindung anhand von Beispielen erläutert. Diese Erläuterungen sind lediglich beispielhaft und schränken den allgemeinen Erfindungsgedanken nicht ein.

### Beispiele:

Voruntersuchungen an stark und schwach sauren Proben (pH <1 und pH 4 bis 5) aus unterschiedlichen REA-Kreisläufen zeigten im Laborversuch die quantitative Fällung des Quecksilbers mit unterschiedlichen konventionellen Fällungsmitteln unabhängig vom pH-Wert und der sonstigen Zusammensetzung.

Auf dieser Grundlage wurden weitere Versuche unternommen, in denen an einem REA-Vorwäscher, der einen mit im Bypass geschalteten Hydrozyklon aufwies, nachgewiesen wurde, daß bei Dosierung eines geeigneten Flockungsmittels die Abtrennung des Quecksilberniederschlags im Unterlauf des Hydrozyklons mit hohem Wirkungsgrad (rd. 70 %) und mit geringem apparativen Aufwand möglich ist.

Auf Basis der Ergebnisse von Laboruntersuchungen und der Erfahrungen des Hydrozyklonbetriebes im Vorwäscher-Bypass wurde eine Pilotanlage in der Abwasseraufbereitungsanlage in einem Steinkohlekraftwerk installiert. Durch Variation der Versuchsbedingungen wurde die Anwendbarkeit des Verfahrens sowohl für zweistufige als auch für einstufige Rauchgasentschwefelungsanlagen nachgewiesen.

Insbesondere wurde gefunden, daß eine Anreicherung von 70 % der Quecksilberverbindungen in 30 % der gesamten Schlammfracht möglich ist. Der Quecksilbergehalt des quecksilberabgereicherten Neutralisationsschlammes (70 % der Gesamtschlammfracht) konnte darüber hinaus gegenüber der Ausgangssituation halbiert werden.

In Anlage 3 ist ein typisches Versuchsergebnis in Form einer Quecksilber-Bilanz wiedergegeben. Die Bilanzergebnisse beziehen sich auf einen Gesamtabwasserdurchsatz von rd. 10 m³/h (im Versuchszeitraum wurde der Hydrozyklon mit rd. 4 m³/h Abwasser beaufschlagt). Die Messergebnisse zeigen, daß der aus dem Hydrozyklonoberlauf nach Neutralisation entstandene Schlamm rd. 70 % der gesamten Schlammfracht ausmacht und 36 % der Hg-Fracht des REA-Abwassers enthält. Im Vergleich dazu weist der aus dem Hydrozyklonunterlauf gebildete Neutralisationsschlamm, der etwa 30 % der gesamten Schlammfracht entspricht, die Hauptmenge des Quecksilbers mit 64 % des Gesamtquecksilbereintrages auf.

In Tabelle 1 sind die diesbezüglichen Versuchsergebnisse in tabellarischer Form aufgelistet.

### Abkürzungen

- TMT:: 1,3,5-Triazin-2,4,6-trithiol-Na-Salz
- FHM:: Flockungshilfsmittel
- KFP:: Kammerfilterpresse
- M:: Motor

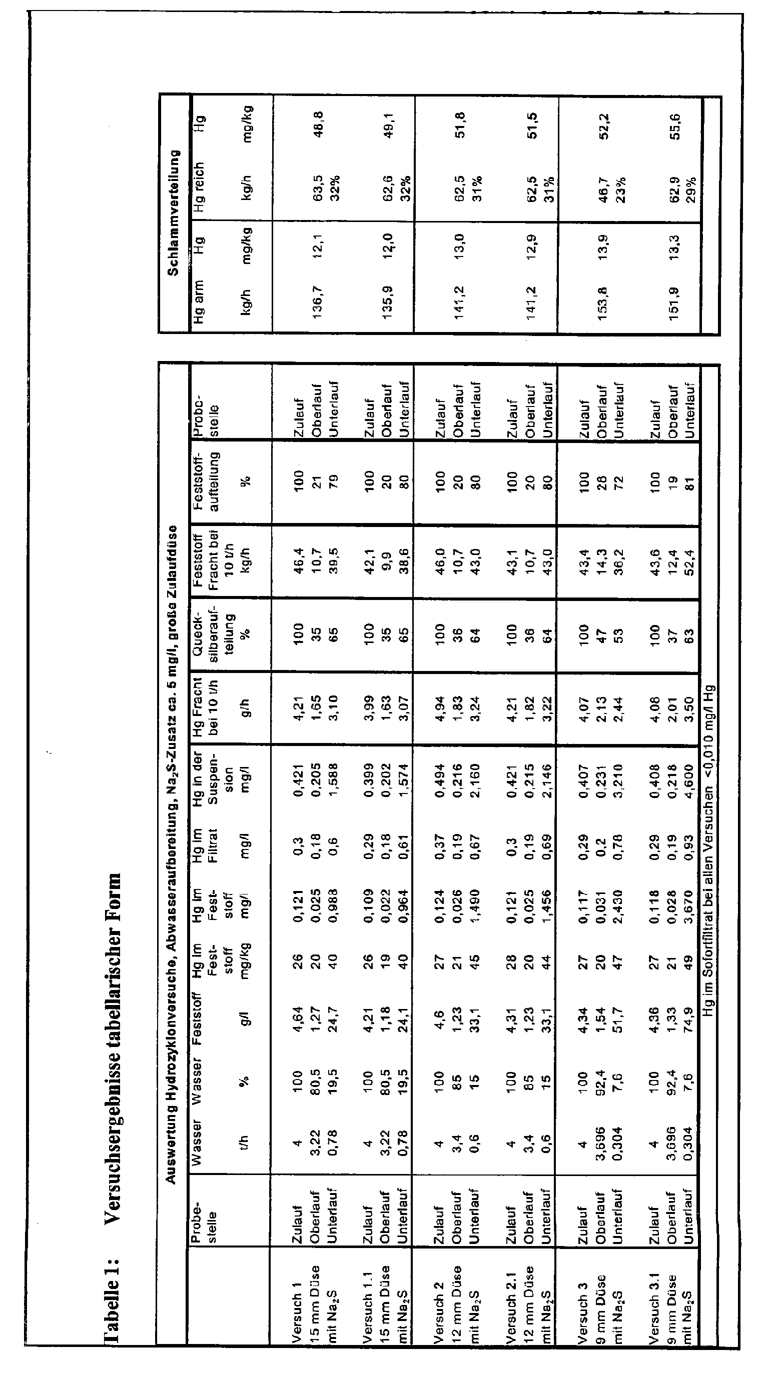

## Patentansprüche

1. Verfahren zur Verminderung der Quecksilberkonzentration in Abwasseraufbereitungsschlämmen von zweistufigen Rauchgasentschwefelungsanlagen, das mindestens eine Reinigungsstufe in der Abwasseraufbereitungsanlage aufweist, wodurch eine Vorabtrennung des zu entfernenden Quecksilbers und/oder der zu entfernenden Quecksilberverbindungen bewirkt wird, wobei
dem Abwasser bei einem pH-Wert <1 mindestens ein Fällungsmittel ausgewählt aus der Gruppe der Alkalisulfide und Thiole zugesetzt wird,
der entstandene Niederschlag durch Zugabe mindestens eines Flockungsmittels und/oder Flockungshilfsmittels unter Verwendung einer Trennvorrichtung abgeschieden wird, wobei der anfallende Abwasserstrom in einen feststoff- und quecksilberverbindungsreichen Unterlauf und einen feststoff- und quecksilberverbindungsarmen Oberlauf aufgeteilt wird,
der quecksilberverbindungsangereicherte Unterlauf dann neutralisiert und einem Entwässerungsaggregat zugeführt wird, und
der feststoffarme Oberlauf in eine Abwasserbehandlungsanlage eingeleitet wird, die im abzuleitenden Abwasser einen Neutralisationsschlamm erzeugt.

2. Verfahren nach Anspruch 1, **dadurch gekennzeichnet, dass** als Fällungsmittel Natriumsulfid verwendet wird.

3. Verfahren nach Anspruch 1 oder 2, **dadurch gekennzeichnet, dass** das Flockungsmittel und/oder Flockungshilfsmittel ein nichtionogenes, anionisches oder kationisches Vinylpolymerisat ist.

4. Verfahren nach einem der vorstehenden Ansprüche, **dadurch gekennzeichnet, dass** das Flockungsmittel und/oder Flockungshilfsmittel ein kationisches Flockungsmittel ist.

5. Verfahren nach einem der vorstehenden Ansprüche, **dadurch gekennzeichnet, dass** das Flockungsmittel und/oder Flockungshilfsmittel eine Wasser-in-Wasser-Polymerdispersion ist.

6. Verfahren nach einem der vorstehenden Ansprüche, **dadurch gekennzeichnet, dass** als Trennvorrichtung ein Hydrozyklon verwendet wird.

7. Verfahren nach Anspruch 6, **dadurch gekennzeichnet, dass** das Flockungsmittel und/oder Flockungshilfsmittel in die Druckleitung einer Pumpvorrichtung dosiert wird und ein zweites Flockungs-und/oder Flockungshilfsmittel in den feststoffarmen Hydrozyklonoberlauf zugegeben wird.

8. Verfahren nach Anspruch 7, **dadurch gekennzeichnet, dass** der feststoffarme Hydrozyklonoberlauf einen Feststoffgehalt < 2 g pro Liter aufweist.

9. Verwendung eines Flockungsmittels und/oder Flockungshilfsmittels zur Verminderung der Quecksilberkonzentration in Abwasseraufbereitungsschlämmen von zweistufigen Rauchgasentschwefelungsanlagen mit mindestens einer Reinigungsstufe in der Abwasseraufbereitungsanlage, wodurch eine Vorabtrennung des zu entfernenden Quecksilbers und/oder der zu entfernenden Quecksilberverbindungen bewirkt wird, wobei
dem Abwasser bei einem pH-Wert <1 mindestens ein Fällungsmittel ausgewählt aus der Gruppe der Alkalisulfide und Thiole zugesetzt wird,
der entstandene Niederschlag durch Zugabe des Flockungsmittels und/oder Flockungshilfsmittels unter Verwendung einer Trennvorrichtung abgeschieden wird, wobei der anfallende Abwasserstrom in einen feststoff- und quecksilberverbindungsreichen Unterlauf und einen feststoff- und quecksilberverbindungsarmen Oberlauf aufgeteilt wird,
der quecksilberverbindungsangereicherte Unterlauf dann neutralisiert und einem Entwässerungsaggregat zugeführt wird, und
der feststoffarme Oberlauf in eine Abwasserbehandlungsanlage eingeleitet wird, die im abzuleitenden Abwasser einen Neutralisationsschlamm erzeugt.

10. Verwendung nach Anspruch 9, **dadurch gekennzeichnet, dass** das Flockungsmittel und/oder Flockungshilfsmittel ein nichtionogenes, anionisches oder kationisches Vinylpolymerisat; ein kationisches Flockungsmittel; und/oder eine Wasser-in-Wasser-Polymerdispersion ist.

## Claims

1. Method for reducing the concentration of mercury in wastewater treatment sludges of two-stage flue gas desulphurization units which method has at least one purification stage in the wastewater treatment unit, as a result of which preseparation of the mercury which is to be removed and/or of the mercury compounds which are to be removed is effected, wherein
to the wastewater at a pH < 1, at least one precipitant selected from the group of alkali metal sulphides and thiols is added,
the resultant precipitate is deposited by addition of at least one flocculant and/or flocculating aid using a separation device, wherein the resultant wastewater stream is divided into a solids-rich and mercury-compounds-rich underflow and a solids-poor and mercury-compound-poor overflow,
the mercury-compound-enriched underflow is then neutralized and fed to a dewatering unit and
the solids-poor overflow is introduced into a wastewater treatment unit which generates a neutralization sludge in the wastewater which is to be discharged.

2. Method according to Claim 1, **characterized in that**, as precipitant, sodium sulphide is used.

3. Method according to Claim 1 or 2, **characterized in that** the flocculant and/or flocculating aid is a nonionogenic, anionic or cationic vinyl polymer.

4. Method according to any one of the preceding claims, **characterized in that** the flocculant and/or flocculating aid is a cationic flocculant.

5. Method according to any one of the preceding claims, **characterized in that** the flocculent and/or flocculating aid is a water-in-water polymer dispersion.

6. Method according to any one of the preceding claims, **characterized in that**, as separation device, a hydrocyclone is used.

7. Method according to Claim 6, **characterized in that** the flocculent and/or flocculating aid is metered into the pressure line of a pump device and a second flocculent and/or flocculating aid is added to the solids-poor hydrocyclone overflow.

8. Method according to Claim 7, **characterized in that** the solids-poor hydrocyclone overflow has a solids content < 2 g per liter.

9. Use of flocculent and/or flocculating aid for reducing the concentration of mercury in wastewater treatment sludges of two-stage flue gas desulphurization units having at least one purification stage in the wastewater treatment unit, as a result of which preseparation of the mercury which is to be removed and/or of the mercury compounds which are to be removed is effected, wherein
to the wastewater at a pH < 1, at least one precipitant selected from the group of alkali metal sulphides and thiols is added,
the resultant precipitate is deposited by addition of the flocculant and/or flocculating aid using a separation device, wherein the resultant wastewater stream is divided into a solids-rich and mercury-compounds-rich underflow and a solids-poor and mercury-compound-poor overflow,
the mercury-compound-enriched underflow is then neutralized and fed to a dewatering unit and
the solids-poor overflow is introduced into a wastewater treatment unit which generates a neutralization sludge in the wastewater which is to be discharged.

10. Use according to Claim 9, **characterized in that** the flocculant and/or flocculating aid is a nonionogenic, anionic or cationic vinyl polymer; a cationic flocculant; and/or a water-in-water polymer dispersion.

## Revendications

1. Procédé pour la diminution de la concentration du mercure dans des boues de traitement d'eaux usées d'installations de désulfuration de gaz de fumée en deux stades, qui comporte au moins un stade de purification dans l'installation de traitement d'eaux usées, ce qui provoque une pré-séparation du mercure à éliminer et/ou des composés contenant du mercure à éliminer, dans lequel
on ajoute à l'eau usée, à un pH < 1, au moins un agent de précipitation choisi dans le groupe des sulfures de métaux alcalins et des thiols,
on sépare le précipité résultant par addition d'au moins un floculant et/ou adjuvant de floculation, en utilisant un dispositif de séparation, le flux d'eau usée produit étant divisé en un courant inférieur riche en matières solides et en composés contenant du mercure et en un courant supérieur pauvre en matières solides et en composés contenant du mercure,
le courant inférieur riche en composés contenant du mercure est ensuite neutralisé et envoyé à un appareil de déshydratation, et
le courant supérieur pauvre en matières solides est introduit dans une installation de traitement d'eaux usées qui engendre une boue de neutralisation dans l'eau usée à déverser.

2. Procédé selon la revendication 1, **caractérisé en ce qu'**on utilise comme agent de précipitation du sulfure de sodium.

3. Procédé selon la revendication 1 ou 2, **caractérisé en ce que** le floculant et/ou l'adjuvant de floculation est/sont un polymère vinylique non ionique, anionique ou cationique.

4. Procédé selon l'une quelconque des revendications précédentes, **caractérisé en ce que** le floculant et/ou l'adjuvant de floculation est/sont un floculant cationique.

5. Procédé selon l'une quelconque des revendications précédentes, **caractérisé en ce que** le floculant et/ou l'adjuvant de floculation est/sont une dispersion de polymère eau-dans-eau.

6. Procédé selon l'une quelconque des revendications précédentes, **caractérisé en ce qu'**on utilise comme dispositif de séparation un hydrocyclone.

7. Procédé selon la revendication 6, **caractérisé en ce que** le floculant et/ou l'adjuvant de floculation est/sont introduits par addition dosée dans le conduit sous pression d'un dispositif de pompage et un deuxième floculant et/ou adjuvant de floculation est/sont ajoutés dans le courant supérieur de l'hydrocyclone.

8. Procédé selon la revendication 7, **caractérisé en ce que** le courant supérieur de l'hydrocyclone, pauvre en matières solides, présente une teneur en matières solides < 2 g par litre.

9. Utilisation d'un floculant et/ou adjuvant de floculation pour la diminution de la concentration du mercure dans des boues de traitement d'eaux usées d'installations de désulfuration de gaz de fumée en deux stades, qui comporte au moins un stade de purification dans l'installation de traitement d'eaux usées, ce qui provoque une pré-séparation du mercure à éliminer et/ou des composés contenant du mercure à éliminer, dans lequel
on ajoute à l'eau usée, à un pH < 1, au moins un agent de précipitation choisi dans le groupe des sulfures de métaux alcalins et des thiols,
on sépare le précipité résultant par addition du floculant et/ou de l'adjuvant de floculation, en utilisant un dispositif de séparation, le flux d'eau usée produit étant divisé en un courant inférieur riche en matières solides et en composés contenant du mercure et en un courant supérieur pauvre en matières solides et en composés contenant du mercure,
le courant inférieur riche en composés contenant du mercure est ensuite neutralisé et envoyé à un appareil de déshydratation, et
le courant supérieur pauvre en matières solides est introduit dans une installation de traitement d'eaux usées qui engendre une boue de neutralisation dans l'eau usée à déverser.

10. Utilisation selon la revendication 9, **caractérisée en ce que** le floculant et/ou l'adjuvant de floculation est/sont un polymère vinylique non ionique, anionique ou cationique ; un floculant cationique ; et/ou une dispersion de polymère eau-dans-eau.
